# EUROPÄISCHE PATENTSCHRIFT

(11) **EP 1 336 626 B1**
(45) Veröffentlichungstag und Bekanntmachung des Hinweises auf die Patenterteilung: **29.12.2004**
(21) Anmeldenummer: 02026297.8
(22) Anmeldetag: 27.11.2002
(51) Int. Cl.: C08F 212/04, C08F 236/04, C08F 2/38, C09D 125/02

(54) **Verfahren zur Herstellung von schutzkolloidstabilisierten wässsrigen Dispersionen**
Process for preparing aqueous dispersions stabilized by protective colloids
Procédé de préparation de dispersions aqueuses stabilisés par des colloides protecteurs

(30) Priorität: 18.02.2002 DE 10206557
(43) Veröffentlichungstag der Anmeldung: 20.08.2003
(73) Patentinhaber: Polymer Latex GmbH & Co. KG, 45772 Marl (DE)
(72) Erfinder: Brizzolara, Davide, Dr., 45701 Herten (DE)
(74) Vertreter: Lüdcke, Joachim Moritz

(56) Entgegenhaltungen:
- EP-A- 0 538 572
- US-A- 4 145 494
- US-A- 4 501 845

## Beschreibung

Gegenstand der Erfindung ist ein Verfahren zur Herstellung von Schutzkolloid-stabilisierten wässrigen Dispersionen.

Die vorliegende Erfindung betrifft ein Verfahren zur Herstellung von schutzkolloidstabilisierten, wässrigen Dispersionen und deren Verwendung.

Dispersionen mit hydrophoben Monomeren wie Styrol oder Butadien, die mit polaren Schutzkolloiden wie PVA oder Hydroxyethylcellulose (HEC) stabilisiert werden, sind schwierig herzustellen, weil sie sehr viskos sind (US 4 670 505). Darum werden diese Copolymerisate in der Regel durch wirksamere ionische und nichtionische Emulgatoren stabilisiert, mit denen die Viskosität im Prozess kleiner ausfällt. Das Schutzkolloid verleiht der Dispersion andere rheologische- und Haftungs-Eigenschaften als der Emulgator, der außerdem die Wasserfestigkeit der Dispersion verschlechtert.

Schutzkolloidstabilisierte Dispersionen lassen sich durch Sprühtrocknen zu einem redispergierbaren Pulver trocknen, die in hydraulisch abbindenden Systemen eine gute Verarbeitbarkeit und eine Verbesserung der mechanischen Eigenschaften bewirken. Solche redispergierbaren Pulver werden in großen Mengen in Bauanwendungen eingesetzt. Bislang werden fast ausschließlich Pulver auf Basis von polaren Monomeren wie Vinylacetat, Vinylchlorid, oder Vinylacetat-Ethylen-Copolymerisaten, Vinylacetat-Veova-Copolymerisaten hergestellt. Aufgrund der höheren Polarität ist die Polymerisation mit polaren Schutzkolloiden unproblematisch und nicht vergleichbar mit hydrophoben Monomeren wie Styrol oder 1,3-Butadien.

Aufgrund der interessanten Eigenschaften schutzkolloidstabilisierter Dispersionen auf Basis hydrophober Monomere und der Möglichkeit diese zu einem redispergierbaren Pulver zu sprühtrocknen, ist ein Verfahren zur Herstellung schutzkolloidstabilisierter Dispersionen auf Basis von Vinylaromaten und 1,3-Dienen von großem wirtschaftlichen Interesse.

Es ist Stand der Technik emulgatorstabilisierte Dispersionen auf Basis von Vinylaromaten und 1,3-Dienen, durch Wasserdampfdestillation von Restmonomeren und leicht flüchtigen Begleitern zu befreien. Dabei liegt der Restmonomerengehalt am Ende der Polymerisation unterhalb 1 %. Das erfindungsgemäße Herstellungsverfahren für Schutzkolloidstabilisierte Dispersionen auf Basis hydrophober Monomere hat neben einer niedrigen Prozessviskosität, die Erreichung eines Endumsatzes > 99 % zum Ziel. Das ist von großem Wirtschaftlichen Interesse, denn je größer die Restmonomermenge ist, desto größer sind die dabei anfallenden Abfallwassermengen, die eine Umweltbelastung darstellen und Kosten bei der Entsorgung verursachen.

Es sind zahlreiche Herstellungsverfahren für schutzkolloidstabilsierte, Dispersionen auf Basis von hydrophoben Copolymerisaten wie Styrol-Acrylat, oder Styrol-Butadien bekannt, die es erlauben, die Viskosität im Prozess zu kontrollieren, die aber hinsichtlich des Verfahrens Nachteile aufweisen.

Die Viskosität von Vinylacetat-(Meth)acrylat-Dipersionen mit einem Vinylacetat-Anteil < 50 % unter Verwendung von PVA oder HEC als Schutzkolloid lässt sich durch stabilisierende Hilfsmittel wie Allylalkohol (USP 4 670 505), Propanol, oder Ethylenglykol (GB-PS 1278813) reduzieren. In EP-A 013 478 wird die Viskosität durch Wasser mischbare organischen Verbindungen wie Methanol und Ethanol reduziert. Die flüchtigen organischen Verbindungen müssen nach der Polymerisation entfernt werden.

In der EP-A 538 571 wird zur Regulierung der Viskosität von Dispersionen mit einem Styrolanteil > 50 Massen-% und/oder C1- bis C8-Alkyl(meth)acrylat die gesamte Schutzkolloidmenge vorgelegt und ein gemischtes Initiatorsystem bestehend aus einem sauren Peroxid und einem Redox-System, oder ein saures Peroxid oder ein Redox-System allein eingesetzt. Außerdem kann die Viskosität durch Verwendung von Triethanolamin als viskositätsregulierende Verbindung gesenkt werden.

In der EP-A 821 016 und EP-A 723 975 wird auf die viskositätsregulierende Wirkung von polaren Comonomeren, die bereits während der Polymerisation vernetzen können, wie Hydroxyethylmethacrylat und Glycidyl(meth)acrylat bei der Polymerisation von Styrol-Acrylaten mit teilverseiftem Polyvinylacetat als Schutzkolloid hingewiesen. Die Polymerisation von Styrol-Butadien-Copolymerisaten gelingt nicht.

In der WO 99/16794 ist beschrieben, dass durch Einsatz eines Gemisches von Schutzkolloiden, die sich in der Oberflächenspannung unterscheiden, sterisch stabilisierte Styrol-Butadien-Copolymer Dispersionen herstellbar sind, die sich zu einem zementstabilen, redispergierbaren Pulver sprühtrocknen lassen. Das eine Schutzkolloid hat als 2%ige wässrige Lösung eine Oberflächenspannung > 40 mN/m, das andere < 40 mN/m als 2%ige wässrige Lösung. Die so hergestellte Styrol-Butadien-Dispersion hat nur einen Festkörpergehalt von 47,0 %, was einem Umsatz von 93,6 % entspricht. Nach der zugrundeliegenden Beispielrezeptur müsste bei einem Umsatz von 100 % der theoretische Festkörpergehalt 50,2 % betragen. Bei diesem Verfahren ist es außerdem von Nachteil, dass ein Gemisch aus zwei unterschiedlichen Schutzkolloiden eingesetzt werden muss.

Die Herstellung einer sterisch stabilisierten Dispersion eines Styrol-Butadien-Copolymerisats, das sich zu einem redispergierbaren Pulver sprühtrocknen lässt, mit nur einem Schutzkolloid, gelingt in der WO 99/28360, indem das Schutzkolloid teilweise vorgelegt und teilweise dosiert wird. Ein Nachteil bei diesem Verfahren sind die sehr großen Teilchengrößen der Dispersion von ca. 2,5 µm bis 4,5 µm. Erfahrungsgemäß sind Dispersionen mit diesen Teilchengrößen (deutlich über 1 µm) nicht lagerstabil. Ein Teil der Monomere muss vorgelegt und teilweise dosiert werden. Werden alle Monomere während der Polymerisation zugegeben, ist der Polymerisationsumsatz nicht vollständig.

Mit Unterstützung eines Mercaptosilans wird in WO 97/15603 mit teilverseiftem Polyvinylalkohol eine butadienhaltige, schutzkolloidstabilisierte Dispersion hergestellt. Nachteil dieses Verfahrens ist die Beschränkung auf das Mercaptosilan und die hohen Kosten für das Silan.

Die Aufgabe der Erfindung bestand darin, ein Verfahren zur Herstellung von emulgatorfreien, schutzkolloidstabilisierten, wässrigen Dispersionen von Styrol/Butadien-Copolymerisaten bereitzustellen, das die geschilderten Nachteile des Standes der Technik überwindet, insbesondere die Reglung der Viskosität unter Verwendung organischer Lösemittel, keine aufwendig herzustellende Schutzkolloide oder Mercaptosilane benötigt sowie die Einstellung der mittleren Teilchendurchmesser unterhalb stabiler kolloidaler Dimensionen von 1000 nm und die Polymerisation bis zu einem Umsatz > 99 % ermöglicht und die Möglichkeit bietet, gut redispergierbare Kunststoffpulver durch Trocknung der Dispersion herzustellen.

Gegenstand der Erfindung ist ein Verfahren zur Herstellung von schutzkolloidstabilisierten, emulgatorfreien, wässrigen Dispersionen auf der Basis von mindestens zwei Monomeren, ausgewählt aus Vinylaromaten und 1,3-Dienen, in Gegenwart von Hilfsstoffen, gegebenenfalls weiteren Comonomeren in einer Menge von 0,1 Gew.-% bis 20 Gew.-%, bezogen auf die Gesamtmenge an Monomeren,
dadurch gekennzeichnet,
dass bei einem Umsatz von 60 bis 80 %, bezogen auf 100 % der Monomere, 0,01 bis 0,4 Gew.-% eines öllöslichen Reglers in das Reaktionsgefäß zugegeben wird und bei einem Umsatz von 80 % bis 95 %, bezogen auf 100 % Monomere, nochmals 0,01 bis 0,4 Gew.-% eines öllöslichen Reglers zugegeben wird.

Geeignete Vinylaromaten sind Styrol und Methylstyrol, wobei Styrol bevorzugt wird.

Beispiele für 1.3-Diene sind 1-3-Butadien und Isopren, wobei 1.3-Butadien bevorzugt wird.

In Frage kommende Comonomere sind Hydroxy(C1- bis C8-Alkyl)(meth)acrylsäureester wie Hydroxyethylacrylat, Hydroxyethylmethacrylat, Hydroxypropylacrylat, Hydroxy(2-ethylhexyl)acrylat, bevorzugt Hydroxyethylmethacrylat; ethylenisch ungesättigte Mono- und Dicarbonsäuren, vorzugsweise Acrylsäure, Methacrylsäure, Fumarsäure, Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure und 2-Acrylamido-2-methyl-propansulfonsäure. Weitere Beispiele sind vorvernetzende Comonomere wie mehrfach ethylenisch ungesättigte Comonomere, wie z. B. Divinyladipat, Diallylmaleat, Allylmethacrylat oder nachvernetzende Comonomere, beispielsweise N-Methylolacrylamid (NMA), N-Methylolmethacrylamid (NMMA) oder Ester des N-Methylolacrylamids oder N-Methylolmethacrylamids. Geeignet sind auch epoxyfunktionelle Comonomere wie Glycidylmethacrylat und Glycidylacrylat. Weitere Beispiele sind Silicium-funktionelle Comonomere wie Acryloxypropyltri(alkoxy)-und Methacryloxypropyltri(alkoxy)-Silane, Vinyltrialkoxysilane und Vinylmethyldialkoxysilane, wobei die Alkoxygruppen beispielsweise Ethoxy- und Ethoxypropylenglykolether-Reste sein können. In einer bevorzugten Ausführungsform werden die gesamten Monomere im Zulauf während der Polymerisation in das Reaktionsgefäß gegeben, können aber auch teilweise vorgelegt und dosiert werden.

Im Allgemeinen werden Hilfsstoffe, ausgewählt aus Schutzkolloiden, Initiatoren, Aktivatoren, pH-Wert-Regulatoren, Molekulargewichtsreglern, eingesetzt.

Beispiele für einsetzbare Schutzkolloide sind Polyvinylalkohol, Polyethylenglykol, modifizierte Stärke und Dextrine, Cellulosederivate wie Hydroxyethylcellulose, Hydroxypropylcellulose oder Carboxymethylcellulose, Polyvinylpyrolidon, Polystyrol-b-Polyethylenoxid- oder Poly(Methacrylat-b-Polyethylenoxid-Blockcopolymere und Casein. Bevorzugt werden Polyvinylalkohole mit einem Polymerisationsgrad von 200 bis 2000 und einem Hydrolysegrad von 74 bis 99,5 % in einer Menge von 1 bis 20 Teilen / 100 Teile Monomere eingesetzt. Das Schutzkolloid oder ein Schutzkolloidgemisch wird vorgelegt, kann aber auch zwischen Vorlage und Zulauf aufgeteilt werden oder nur während der Polymerisation im Zulauf zugegeben werden.

Die radikalischen Initiatoren sind Peroxide, Hydroperoxide, Wasserstoffperoxid, Natrium-, Kalium-, oder Ammoniumperoxodisulfat, Azoverbindungen, allein oder in Kombination. In einer bevorzugten Ausführungsform der Erfindung wird wasserlösliches Natriumperoxodisulfat in Kombination mit tert.-Butylhydroperoxid in einer Gesamtmenge von 0,01 bis 2 Massen-% bezogen auf die gesamten Monomeren, vorgelegt. Als Aktivatoren wirken wasserlösliche Reduktionsmittel, wie Natrium-, Kalium-, Ammoniumsulfit oder -bisulfit, Natriumformaldehydsulfoxylat oder Ascorbinsäure. Bevorzugt wird der Aktivator, in einer Menge von 0,01 bis 2 Massen-%, bezogen auf die gesamten Monomeren, während der Polymerisation dosiert.

Zur Einstellung des pH-Werts während der Polymerisation wird ein oder mehrere Puffer, wie Beispielsweise Natriumcarbonat, Natriumhydrogencarbonat, Trikaliumphosphat, Ethylendiamintetracetat, oder Nitrilotriessigsäure eingesetzt. Tertiäre Amine können zur Unterstützung eingesetzt werden.

Zur Steuerung des Molekulargewichts können während der Polymerisation regelnde Substanzen eingesetzt werden. Sie werden in Mengen zwischen 0,1 bis 3 Massen-% bezogen auf die Gesamtmonomere eingesetzt. Die Molekulargewichtsregler können vorgelegt, zugegeben oder teilweise vorgelegt und teilweise zugegeben werden. Beispiele solcher Substanzen sind Mercaptone wie z. B. n-Dodecylmercaptan, tert.-Dodecylmercaptan, Mercaptopropionsäure, Mercaptopropionsäuremethylester, oder tert. Amine, wie z. B. Triethanolamin.

Geeignete Öllösliche Regler für die Zugabe bei einem Umsatz von 60 % bis 80 % und von 80 % bis 95 % bezogen auf 100 % Monomer sind Mercaptane wie z. B. n-Dodecylmercaptan, tert.-Dodecylmercaptan, Mercaptopropionsäure oder Mercaptopropionsäuremethylester. Die Zugabe des Reglers kann im Schuss erfolgen, oder auch kontinuierlich in einem Zeitraum erfolgen, in dem der Umsatz bei 60 % bis 80 %, bzw. 80 % bis 95 % bezogen auf 100 % Monomer liegt.

Die Polymerisationstemperatur beträgt 30 °C bis 90 °C, vorzugsweise 60 °C bis 85 °C.

Die Polymerisation wird bevorzugt so durchgeführt, dass die gesamte Schutzkolloidmenge vorgelegt wird und die Monomeren und andere Komponenten während der Polymerisation zugeführt werden. Es ist aber auch möglich, das Schutzkolloid und die Monomere teilweise vorzulegen und teilweise zuzugeben, oder das Schutzkolloid und die Monomere vollständig vorzulegen.

Der Feststoffgehalt der fertigen Dispersion liegt bei 30 bis 70 %, vorzugsweise bei 40 bis 60 %.

Nach beendeter Monomerzugabe kann in bekannter Weise durch Nachinitiierung die Polymerisation bis zu einem niedrigen Restmonomergehalt weitergeführt werden.

Das Polymerisat weist eine Glasübergangstemperatur von - 40 bis + 100 °C, vorzugsweise von- 20 bis + 50 °C auf. Die Zusammensetzung des Copolymerisats ist so gewählt, dass die oben angegebene Glasübergangstemperatur erreicht wird. Dabei ist der Anteil des Comonomers zu berücksichtigen. Die Tg kann mittels der FOX-Gleichung näherungsweise vorausberechnet werden. Nach FOX T. G., Bull. Am. Physics Soc. 1, 3, page 123 (1956) gilt: 1/Tg = x1/Tg1 + X2/Tg2 + .....+ xn/Tgn, wobei xn für den Massenbruch (Gew.-%/100) des Monomers n steht, und Tgn die Glasübergangstemperatur in Grad Kelvin des Homopolymers des Monomer n ist. Tg-Werte für Homopolymerisate sind in Polymer Handbook 2end Edition, J. Wiley & Sons, New York (1975) aufgeführt. Die Glasübergangstemperatur Tg der Polymerisate kann in bekannter Weise mittels Differential Scanning Calorimetry (DSC) ermittelt werden.

Die erfindungsgemäßen Dispersionen und daraus hergestellten Pulver sind geeignet zur Herstellung von Klebstoffzusammensetzungen, wie z. B. Fliesenklebern, Spachtelmassen, Mörtel wie z. B. Zementmörteln, Kalkmörteln, Trockenmörteln, Putze und Gipsbaustoffen sowie Dispersionsfarben.

Die nachfolgenden Beispiele dienen der weiteren Erläuterung der Erfindung.

### Bestimmung des Umsatzes

Es wurden stündlich aus dem Laborreaktor Proben gezogen, von denen der Festkörpergehalt gravimetrisch bestimmt wurde. Mit Hilfe von EXCEL wurde der Umsatz bezogen auf die Gesamtmenge der eingesetzten Monomere berechnet.

### Sprühtrocknung der Dispersionen

Die Dispersionen wurden mit 10 Teilen PVA (als ca. 20 %ige Lösung)/ 100 Teile Dispersionsfeststoff versetzt und auf einen Feststoffgehalt von 35 % eingestellt. Der Latex wurde in einer Sprühtrocknungsapparatur in Luftgleichstrom getrocknet. Als Antiblockmittel wurden 10 % (bezogen auf Feststoffgehalt) eines Talkum-Dolomit-Gemisches (1:1) eingesetzt, das während der Trocknung parallel zur Speise zugeführt wurde.

### Teilchengröße nach Redispergierung in Wasser mit und ohne Ultraschallbehandlung

Das Pulver wurde in Wasser dispergiert und auf eine Konzentration von 0,1 % verdünnt. Die Teilchengrößenverteilung wurde mit einem Microtrac X-100 der Fa. Malvern vor und nach 900 s Ultraschallbehandlung gemessen.

### Beispiel 1:

In einem 5-Liter Druckautoklaven mit Blattrührer und Manteltemperierung wurden 398,7 g Wasser, 361 g einer 18,7-%igen PVA-Lösung (Hydrolisierungsgrad ca. 87 %), 1,35 g EDTA, 2,7 g tert.-Dodecylmercaptan und 2,7 g Triethanolamin vorgelegt und auf 75 °C aufgeheizt. Wenn die Reaktorinnentemperatur konstant bleibt werden 1,35 g Natriumperoxodisulfat und 11,57 g tert.-Butylhydroperoxid (70-%ig) im Schuss zugegeben. Parallel dazu werden 379,8 g einer 3,6 Gew.-%igen PVA-Lösung innerhalb einer Stunde zugegeben. Fünf Minuten nach der Natriumperoxodisulfat- und ter.-Butylhydroperoxid-Zugabe werden 796,5 g Styrol, 459 g Butadien, 94,5 g Hydroxyethylmethacrylat und 5,4 g tert.-Dodecylmercaptan in fünf Stunden in den Reaktor eingefahren. Vier Stunden nach Beginn der Zugabe der Monomere und des tert.-Dodecylmercaptans werden 379,8 g einer 3,6 Gew.-%igen PVA-Lösung innerhalb einer Stunde in den Reaktor eingefahren. Parallel dazu werden 369,1 g einer 2,24 Gew.-%igen Natriumformaldehydsulfoxylat-Lösung innerhalb sechs Stunden zugegeben. Nach beendeter Monomerdosierung werden 2,7 g tert.-Butylhydroperoxid (70 Gew.-%ig) und 2,7 g tert.-Dodecylmercaptan im Schuss zugegeben. Nach beendeter Zugabe der Natriumformaldehysulfoxylat-Lösung wird die Temperatur innerhalb fünf Minuten von 75 °C auf 70 °C abgesenkt. Zwei Stunden nach beendeter Monomerzugabe werden nochmals 2,7 g tert.-Dodecylmercaptan im Schuss zugegeben. Der Umsatz beträgt zu diesem Zeitpunkt 82 % bezogen auf 100 % Monomer. Nach elf Stunden Gesamtlaufzeit wird der Ansatz auf Zimmertemperatur gekühlt und mit Diethylamin abgestoppt.

Bei einem Umsatz von 100 % müsste der Festkörpergehalt bei 45 % liegen. Da aber stündlich Proben zur Umsatzbestimmung genommen wurden, ist dem System Monomer entzogen worden, wodurch der Festkörpergehalt nur 44,3 % beträgt. Der Reststyrolgehalt der Dispersion beträgt 0,175 % (GC-Headspace Bestimmung), was einem Umsatz größer 99 % entspricht. Der Ansatz wurde 24 h in einem offenen Behälter bei 65 °C gerührt, um das Rest-Styrol und andere Begleiter zu entfernen. Anschließend hatte der Ansatz bei einem Festkörpergahlt von 49,9 % eine Rheomat-Viskosität von 1050 mPas (Schergeschwindigkeit 99 1/s), eine Teilchengröße von 261 nm und einen pH-Wert von 7,0.

Die Dispersion wurde durch Sprühtrocknung zu einem Pulver getrocknet, das eine gute Redispergierbarkeit aufweist. Das Pulver zerfällt in Wasser sofort auf eine mittlere Teilchengröße von D₅₀=32,01 µm und nach 900 s Ultraschallbehandlung auf eine mittlere Teilchengröße von D₅₀=10,45 µm.

### Vergleichsbeispiel 1

Der Ansatz wurde analog Beispiel 1 hergestellt, aber auf die zweite tert.-Dodecylmercaptan-Schuss-Zugabe, zwei Stunden nach beendeter Monomerzugabe bei einem Umsatz > 80 % bezogen auf 100 % Monomer wurde verzichtet. Der Ansatz hat einen Reststyrolgehalt von 0,31 %, bei einem Festkörpergehalt von 44,7 %, das bei einem theoretischen Festkörpergehalt von 45 % einem Umsatz von 99,3 % entspricht. Bei diesem Versuch wurden keine Proben zur Umsatzbestimmung genommen. Der Ansatz wurde wie oben beschrieben von Rest-Styrol und flüchtigen Begleitstoffen befreit und auf einen Feststoffgehalt von 50,4 % aufkonzentriert. Die Viskosität war so hoch, dass Sie nicht messbar war.

### Vergleichsbeispiel 2

Der Ansatz wurde analog Vergleichsbeispiel 1 hergestellt, aber auf die tert.-Dodecyl-Zugabe nach beendeter Monomerzugabe bei einem Umsatz größer 60 % bezogen auf 100 % Monomer wurde verzichtet. Acht Stunden nach Beginn der Polymerisation durch Zugabe der Initiatoren tert.-Butylhydroperoxid und Natriumperoxodisulfat ist der Ansatz koaguliert. Das wurde durch einen schlagartigen Rührerstillstand in der achten Stunde erkannt.

Das erfindungsgemäße Herstellungsverfahren aus Beispiel 1 ermöglicht die Schutzkolloidstabilisierte Polymerisation von hydrophoben Monomeren wie bspw. Vinylaromaten und 1,3-Dienen bis zu einem Endumsatz > 99 %. Die fast vollständige Umsetzung der Monomere hat wirtschaftliche Vorteile. Der Reststyrolgehalt kleiner 1 Gew.-% ist ein Wert, der bei emulgatorstabilisierten Carboxylierten Styrol-Butadien-Dispersionen Stand der Technik ist. Die Vergleichsbeispiele 2 und 3 belegen, dass ein hoher Endumsatz bei der schutzkolloidsabilisierten Polymerisation von hydrophoben Monomeren zu einem kritischen Anstieg der Viskosität führt. Erst die Zugabe eines öllöslichen Reglers gegen Ende der Polymerisation ermöglicht einen hohen Endumsatz und eine niedrige Prozessviskosität. Das aus der erfindungsgemäßen Dispersion hergestellte Pulver verfügt über eine gute Redispergierbarkeit und ist zum Einsatz in hydraulisch abbindenden Systemen zur Verbesserung der Verarbeitbarkeit und der mechanischen Eigenschaften geeignet.

## Patentansprüche

1. Verfahren zur Herstellung von schutzkolloidstabilisierten, emulgatorfreien, wässrigen Dispersionen auf der Basis von mindestens zwei Monomeren, ausgewählt aus Vinylaromaten und 1,3-Dienen, in Gegenwart von Hilfsstoffen, gegebenenfalls weiteren Comonomeren in einer Menge von 0,1 Gew.-% bis 20 Gew.-%, bezogen auf die Gesamtmenge an Monomeren,
**dadurch gekennzeichnet,**
**dass** bei einem Umsatz von 60 bis 80 %, bezogen auf 100 % der Monomere, 0,01 bis 0,4 Gew.-% eines öllöslichen Reglers in das Reaktionsgefäß zugegeben wird und bei einem Umsatz von 80 % bis 95 %, bezogen auf 100 % der Monomere, nochmals 0,01 bis 0,4 Gew.-% eines öllöslichen Reglers zugegeben wird.

2. Verfahren nach Anspruch 1,
**dadurch gekennzeichnet,**
**dass** als Vinylaromaten Styrol und/oder Methylstyrol eingesetzt werden.

3. Verfahren nach Anspruch 1 oder 2,
**dadurch gekennzeichnet,**
**dass** als 1,3-Diene 1,3-Butadien und/oder Isopren eingesetzt werden.

4. Verfahren nach mindestens einem der Ansprüche 1 bis 3,
**dadurch gekennzeichnet,**
**dass** Hilfsstoffe, ausgewählt aus Schutzkolloiden, Initiatoren, Aktivatoren, pH-Wert-Regulatoren, Molekulargewichtsreglern, eingesetzt werden.

5. Verfahren nach mindestens einem der Ansprüche 1 bis 4,
**dadurch gekennzeichnet,**
**dass** als Schutzkolloide Polyvinylalkohole, Polyethylenglykol, modifizierte Stärke, Dextrine, Cellulosederivate, Polyvinylpyrolidon, Polystyrol-b-Polyethylenoxid- oder Poly(methacrylat)-*b*-Polyethylenoxid-Blockcopolymere oder Casein, allein oder in Mischungen, eingesetzt werden.

6. Verfahren nach mindestens einem der Ansprüche 1 bis 5,
**dadurch gekennzeichnet,**
**dass** als Initiatoren Peroxide, Hydroperoxide, Wasserstoffperoxid, Natrium-, Kalium-, oder Ammoniumperoxodisulfat, Azoverbindungen, allein oder in Mischungen, eingesetzt werden.

7. Verfahren nach mindestens einem der Ansprüche 1 bis 6,
**dadurch gekennzeichnet,**
**dass** als pH-Wert-Regulatoren Natriumcarbonat, Natriumhydrogencarbonat, Trikaliumphosphat, Ethylendiamintetracetat, oder Nitrilotriessigsäure, allein oder in Mischungen, eingesetzt werden.

8. Verfahren nach mindestens einem der Ansprüche 1 bis 7,
**dadurch gekennzeichnet,**
**dass** als Molekulargewichtsregler n-Dodecylmercaptan, tert.-Dodecylmercaptan, Mercaptopropionsäure, Mercaptopropionsäuremethylester, und/oder Triethanolamin, allein oder in Mischungen, eingesetzt werden.

9. Verfahren nach mindestens einem der Ansprüche 1 bis 8,
**dadurch gekennzeichnet,**
**dass** Comonomere, ausgewählt aus Hydroxy(C₁- bis C₈-Alkyl)(meth)acrylsäureestern, ethylenisch ungesättigten Mono- und Dicarbonsäuren, ethylenisch ungesättigten Carbonsäureamiden und -nitrilen, Mono- und Diestem der Fumarsäure oder Maleinsäure, ethylenisch ungesättigten Sulfonsäuren bzw. deren Salzen, vorvernetzenden Comonomeren, nachvernetzenden Comonomeren, epoxyfunktionellen Comonomeren und siliciumfunktionellen Comonomeren, allein oder in Mischungen, eingesetzt werden.

10. Verfahren nach Anspruch 9,
**dadurch gekennzeichnet,**
**dass** als Comonomere Hydroxyethylacrylat, Hydroxyethylmethacrylat, Hydroxypropylacrylat, Hydroxy(2-ethylhexyl)acrylat, Acrylsäure, Methacrylsäure, Fumarsäure, Maleinsäure, Acrylamid, Acrylnitril, Diethyl- und/oder Diisopropylester der Fumarsäure und Maleinsäure, Maleinsäureanhydrid, Vinylsulfonsäure, 2-Acrylamido-2-methyl-propansulfonsäure, Divinyladipat, Diallylmaleat, Allylmethacrylat, N-Methylolacrylamid (NMA), N-Methylolmethacrylamid (NMMA), Ester des N-Methylolacrylamids oder N-Methylolmethacrylamids, Glycidylmethacrylat, Glycidylacrylat, Acryloxypropyltri(alkoxy)- und Methacryloxypropyltri(alkoxy)-Silane, Vinyltrialkoxysilane, Vinylmethyldialkoxysilane, wobei die Alkoxygruppen beispielsweise Ethoxy- und Ethoxypropylenglykolether-Reste sein können, allein oder in Mischungen, eingesetzt werden.

11. Verfahren nach mindestens einem der Ansprüche 1 bis 10,
**dadurch gekennzeichnet,**
**dass** die Polymerisationstemperatur 30 bis 90 °C beträgt.

12. Verfahren nach mindestens einem der Ansprüche 1 bis 11,
**dadurch gekennzeichnet,**
**dass** das Verhältnis von Festkörper zu Wasser entsprechend einem Feststoffgehalt der fertigen Dispersion von 30 bis 70 % eingestellt wird.

13. Verfahren nach mindestens einem der Ansprüche 1 bis 12,
**dadurch gekennzeichnet,**
**dass** die gesamte Schutzkolloidmenge vorgelegt wird und die Monomere und Hilfsstoffe während der Polymerisation zugeführt werden.

14. Verwendung der Dispersion, hergestellt nach mindestens einem der Ansprüche 1 bis 13, zur Herstellung von redispergierbaren Pulvern.

15. Verwendung der Dispersion, hergestellt nach mindestens einem der Ansprüche 1 bis 13, zur Herstellung von Klebstoffzusammensetzungen, Spachtelmassen, Mörtel, Putz, Gipsbaustoffen und Dispersionsfarben.

## Claims

1. A process for the preparation of protective-colloid-stabilized, emulsifier-free, aqueous dispersions on the basis of at least two monomers selected from vinylaromatics and 1,3-dienes, in the presence of auxiliaries, and optionally additional comonomers in the amount of 0.1 weight percent to 20 weight percent, based on the total amount of monomers,
**characterized in that**
0.01 to 0.4 weight percent of an oil-soluble regulator at a conversion of 60 percent to 80 percent, based on 100 percent of the monomers, is added to the reaction mixture, and 0.01 to 0.4 weight percent of an oil-soluble regulator at a conversion of 80 percent to 95 percent, based on 100 percent of the monomers, is further added.

2. The process according to claim 1,
**characterized in that**
the vinylaromatics are styrene and/or methylstyrene.

3. The process according to claim 1 or 2,
**characterized in that**
the 1,3-dienes are 1,3-butadiene and/or isoprene.

4. The process according to at least one of claims 1 to 3,
**characterized in that**
auxiliaries are used, selected from the group consisting of protective colloids; initiators; activators; pH-value regulators; and molecular-weight regulators.

5. The process according to at least one of claims 1 to 4,
**characterized in that**
the protective colloids are selected from polyvinyl alcohols; polyethylene glycol; modified starch; dextrins; cellulose derivatives; polyvinyl pyrrolidone; polystyrene-b-polyethylene oxide or poly(methacrylate)-b-polyethylene oxide block copolymers or casein; taken individually or as mixtures.

6. The process according to at least one of claims 1 to 5,
**characterized in that**
the initiators are selected from peroxides; hydroperoxides; hydrogen peroxide; sodium, potassium or ammonium peroxodisulfate; azo compounds; taken individually or as mixtures.

7. The process according to at least one of claims 1 to 6,
**characterized in that**
the pH-value regulators are selected from sodium carbonate; sodium hydrogen carbonate; tripotassium phosphate; ethylene diamine tetraacetate; or nitrilotriacetic acid; taken individually or as mixtures.

8. The process according to at least one of claim 1 to 7,
**characterized in that**
the molecular-weight regulators are selected from n-dodecyl mercaptan; tert-dodecyl mercaptan; mercaptopropionic acid; mercaptopropionic acid methyl ester; and/or triethanolamine; taken individually or as mixtures.

9. The process according to at least one of claim 1 to 8,
**characterized in that**
comonomers are used, selected from the group consisting of hydroxy(C₁₋₈-alkyl)(meth)acrylic acid esters; ethylenically unsaturated mono- and dicarboxylic acids; ethylenically unsaturated amides and nitriles; mono- and diesters of fumaric acid or maleic acid; ethylenically unsaturated sulfonic acids or their salts; precrosslinking comonomers; postcrosslinking comonomers; expoxy-functional comonomers; and silicon-functional comonomers; taken individually or as mixtures.

10. The process according to claim 9,
**characterized in that**
the comonomers are selected from hydroxyethyl acrylate; hydroxyethyl methacrylate; hydroxypropyl acrylate; hydroxy(2-ethylhexyl) acrylate; acrylic acid; methacrylic acid; fumaric acid; maleic acid; acrylamide; acrylonitrile; diethyl and/or diisopropyl esters of fumaric acid and maleic acid; maleic anhydride; vinylsulfonic acid; 2-acrylamido-2-methylpropane-sulfonic acid; divinyl adipate; diallyl maleate; allyl methacrylate; N-methylol acrylamide (NMA); N-methylol methacrylamide (NMMA); esters of N-methylol acrylamide or N-methylol methacrylamide; glycidyl methacrylate; glycidyl acrylate; acryloxypropyl tri(alkoxy)- and methacryloxypropyl tri(alkoxy)-silanes, vinyl trialkoxysilanes, and vinylmethyl dialkoxysilanes, whereby the alkoxy groups may, for example, be radicals of ethoxy and ethoxypropylene glycol ether; taken individually or as mixtures.

11. The process according to at least one of claims 1 to 10,
**characterized in that**
the polymerization temperature is 30 to 90°C.

12. The process according to at least one of claims 1 to 11,
**characterized in that**
the ratio of solid to water is adjusted to give a solids content of the prepared dispersion of 30 to 70 percent.

13. The process according to at least one of claims 1 to 12,
**characterized in that**
the total amount of protective colloid is initially introduced and the monomers and auxiliaries are fed in during the polymerization.

14. Use of the dispersion prepared according to at least one of claims 1 to 13 in the preparation of re-dispersible powders.

15. Use of the dispersion prepared according to at least one of claims 1 to 13 in the preparation of adhesive compositions, knife fillers, mortar, plaster, gypsum building materials, and dispersion paints.

## Revendications

1. Procédé pour la préparation de dispersions aqueuses, sans émulsionnant, stabilisées par un colloïde protecteur à base d'au moins deux monomères choisis parmi les composés vinylaromatiques et des 1,3-diènes, en présence d'adjuvants, le cas échéant d'autres comonomères dans une proportion de 0,1 % en poids à 20 % en poids, rapporté à la quantité totale de monomères,
**caractérisé en ce que**
pour un taux de transformation de 60 à 80 %, rapporté à 100 % des monomères, on ajoute 0,01 à 0,4 % en poids d'un régulateur oléosoluble dans la cuve à réaction et, pour un taux de transformation de 80 à 95 %, rapporté à 100 % des monomères, on ajoute encore une fois 0,01 à 0,4 % en poids d'un régulateur oléosoluble.

2. Procédé selon la revendication 1,
**caractérisé en ce que**
comme composés vinylaromatiques on utilise le styrène et/ou le méthylstyrène.

3. Procédé selon la revendication 1 ou 2,
**caractérisé en ce que**
comme 1,3-diènes, on utilise le 1,3-butadiène et/ou l'isoprène.

4. Procédé selon au moins une des revendications 1 à 3,
**caractérisé en ce que**
on utilise des adjuvants, choisis parmi des colloïdes protecteurs, initiateurs, activateurs, régulateurs de pH, régulateurs de poids moléculaire.

5. Procédé selon au moins une des revendications 1 à 4,
**caractérisé en ce que**
comme colloïdes protecteurs, on utilise des alcools polyvinyliques, le polyéthylèneglycol, l'amidon modifié, des dextrines, des dérivés de cellulose, la polyvinylpyrrolidone, des copolymères séquencés polystyrène-b-oxyde de polyéthylène ou poly(méth)acrylate-b-oxyde de polyéthylène ou de la caséine, seuls ou en mélanges.

6. Procédé selon au moins une des revendications 1 à 5,
**caractérisé en ce que**
comme initiateurs, on utilise des peroxydes, des hydroperoxydes, le peroxyde d'hydrogène, le peroxodisulfate de sodium, potassium ou ammonium, des composés azo, seuls ou en mélanges.

7. Procédé selon au moins une des revendications 1 à 6,
**caractérisé en ce que**
comme régulateurs de pH, on utilise le carbonate de sodium, l'hydrogénocarbonate de sodium, le phosphate tripotassique, le tétracétate d'éthylène diamine ou l'acide nitrilotriacétique, seuls ou en mélanges.

8. Procédé selon au moins une des revendications 1 à 7,
**caractérisé en ce que**,
comme régulateur de poids moléculaire, on utilise le n-dodécylmercaptan, le tert-dodécylmercaptan, l'acide mercaptopropionique, l'ester méthylique de l'acide mercaptopropionique et/ou la triéthanolamine, seuls ou en mélanges.

9. Procédé selon au moins une des revendications 1 à 8,
**caractérisé en ce que**
On utilise des comonomères choisis parmi des esters d'acides hydroxy(alkyle en C₁ à C₈) (méth)acryliques, des acides mono- et di-carboxyliques éthyléniquement insaturés, des amides et nitriles d'acides carboxyliques éthyléniquement insaturés, des mono- et di-esters de l'acide fumarique et de l'acide maléïque, des acides sulfoniques éthyléniquement insaturés et leurs sels, des comonomères préréticulants, des comonomères post-réticulants, des comonomères à fonctionnalité époxy et des comonomères à fonctionnalité silicium, seuls ou en mélanges.

10. Procédé selon la revendication 9,
**caractérisé en ce que**
comme monomères, on utilise l'acrylate d'hydroxyéthyle, le méthacrylate d'hydroxyéthyle, l'acrylate d'hydroxypropyle, l'acrylate d'hydroxy(2-éthylhexyle), l'acide acrylique, l'acide méthacrylique, l'acide fumarique, l'acide maléïque, l'acrylamide, l'acrylonitrile, les esters diéthyliques et/ou diisopropyliques de l'acide fumarique et de l'acide maléïque , l'anhydride de l'acide maléïque, l'acide vinylsulfonique, l'acide 2-acrylamino-2-méthyl-propanesulfonique, l'adipate de divinyle, le maléate de diallyle, le méthacrylate d'allyle, le N-méthylolacrylamide (NMA), le N-méthylolméthacrylamide (NMMA), des esters de N-méthylolacrylamide ou de N-méthylolméthacrylamide, le méthacrylate de glycidyle, l'acrylate de glycidyle, les acryloxypropyltri(alcoxy) et méthacryloxypropyltri(alcoxy)silanes, les vinyltriacoxysilanes et les vinylméthyldialcoxysilanes, les groupes alcoxy pouvant être, par exemple des restes éthoxy et éthoxypropylèneglycoléther, seuls ou en mélanges.

11. Procédé selon au moins une des revendications 1 à 10,
**caractérisé en ce que**
la température de polymérisation est de 30 à 90 °C.

12. Procédé selon au moins une des revendications 1 à 11,
**caractérisé en ce que**
le rapport des corps solides à l'eau est ajusté en fonction d'une teneur en matière solide de la dispersion finie de 30 à 70 %.

13. Procédé selon au moins une des revendications 1 à 12,
**caractérisé en ce que**
la quantité de colloïde protecteur totale est introduite en premier et les monomères et les adjuvants sont ajoutés pendant la polymérisation.

14. Utilisation de la dispersion préparée selon au moins une des revendications 1 à 13, pour la préparation de poudres redispersables.

15. Utilisation de la dispersion préparée selon au moins une des revendications 1 à 13, pour la préparation de compositions de colles, de masses à appliquer à la truelle, mortiers, enduits ou matériaux de construction à base de plâtre et peintures - dispersions.
